(19) Europäisches Patentamt
European Patent Office
Office européen des brevets

(11) **EP 0 722 251 B1**

## (12) FASCICULE DE BREVET EUROPEEN

(45) Date de publication et mention
de la délivrance du brevet:
**18.03.2009  Bulletin 2009/12**

(51) Int Cl.:
***H04N 7/26*** (2006.01)

(21) Numéro de dépôt: **96400042.6**

(22) Date de dépôt: **08.01.1996**

(54) **Procédé d'interpolation d'images**

Verfahren zur Bildinterpolation

Method for interpolating images

(84) Etats contractants désignés:
**DE GB**

(30) Priorité: **10.01.1995  FR 9500204**

(43) Date de publication de la demande:
**17.07.1996  Bulletin 1996/29**

(73) Titulaire: **FRANCE TELECOM**
**75015 Paris (FR)**

(72) Inventeurs:
- **Dudon, Marie**
  **F-92130 Issy Les Moulineaux (FR)**
- **Avaro, Olivier**
  **F-75014 Paris (FR)**
- **Eude, Gérard**
  **F-77200 Torcy (FR)**

(74) Mandataire: **Ledey, Michel et al**
**France Télécom,**
**R&D/PIV/PI,**
**38-40 Rue du Général Leclerc**
**92794 Issy Moulineaux Cedex 9 (FR)**

(56) Documents cités:
EP-A- 0 397 402        EP-A- 0 632 657

- **ICASSP'94 - IEEE INTERNATIONAL CONFERENCE ON ACOUSTICS, SPEECH AND SIGNAL PROCESSING, vol. 5, 19 - 22 Avril 1994 pages 205-208, J.NIEWEGLOWSKI ET AL. 'Motion Compensated Video Sequence Interpolation Using Digital Image Warping'**
- **VISUAL COMMUNICATION AND IMAGE PROCESSING '91 - PROCEEDINGS OF THE SPIE, 1991, vol. 1605, no. 2, US, pages 546-557, NAKAYA ET AL. 'An iterative motion estimation method using triangular patches for motion compensation'**
- **ELECTRONICS LETTERS, vol. 27, no. 20, 26 Septembre 1991 STEVENAGE GB, pages 1788-1790, J.K.KIM AND C.M.KYUNG 'Fast frame-to-frame interpolation technique for scenes containing moving objects'**
- **ICASSP'91 - INTERNATIONAL CONFERENCE ON ACOUSTICS, SPEECH AND SIGNAL PROCESSING, vol. 4, 14 - 17 Avril 1991 pages 2713-2716, G.SULLIVAN AND R.L.BAKER 'Motion Compensation for video compression using control grid interpolation'**
- **IEEE TRANSACTIONS ON CIRCUITS AND SYSTEMS FOR VIDEO TECHNOLOGY, vol. 4, no. 1, Février 1994 NEW YORK US, pages 42-51, C.H.HUANG ET AL. 'A new motion compensation method for image sequence coding using hierarchical grid interpolation'**
- **IEEE TRANSACTIONS ON CONSUMER ELECTRONICS, vol. 39, no. 3, Août 1993 pages 141-150, J.NIEWEGLOWSKI ET AL. 'A novel video coding scheme based on temporal prediction using digital image warping'**
- **SPIE - IMAGE CODING , vol. 594, Décembre 1985 pages 119-128, G.KUMMERFELDT ET AL. 'Coding Television Signals at 320 and 64 Kbit/s'**

**Description**

Domaine technique

La présente invention concerne un procédé d'interpolation d'images par triangulation et transformation géométrique.

Etat de la technique antérieure

Le domaine technique de l'invention est celui de l'interpolation d'images, que cette interpolation soit temporelle ou stéréoscopique.

De manière générale l'interpolation inter-images temporelle consiste en la construction et l'insertion d'images supplémentaires par un système de réception. De la qualité des images ainsi reconstituée dépend en partie la qualité du système de compression ou de restitution.

Dans le cadre des systèmes de codage d'images à réduction de débit numérique (comme par exemple celui défini par la recommandation H.261 du CCITT (organisation dont la nouvelle appellation est UIT.T) pour le codage de la vidéo à p fois 64 kbit/s), un sous-échantillonnage des images au codeur est un des moyens utilisés. Les images non transmises sont alors dupliquées ou interpolées par le décodeur, ce qui constitue un moyen simple de réduire de manière significative le débit d'informations nécessaire à la transmission du signal vidéo.

Différents procédés d'interpolation d'images utilisant une estimation et une compensation de mouvement ont été proposés (voir les références[1], [2] et [3] données en fin de description).

Une image interpolée peut aussi être utilisée comme une image de prédiction dans certaines méthodes de codage (comme c'est le cas pour la norme de l'ISO/IEC 11172.2 dite MPEG1) : elles sont appelées alors "B-frames", "P-frames".

L'interpolation temporelle d'images est aussi utile dans le cas d'applications médicales pour lesquelles on peut souhaiter une exposition minimale du patient à l'appareil de prise de vues (rayons-X par exemple) en réduisant le nombre de vues, c'est-à-dire d'images.

Une autre application est celle de l'interpolation d'images dans le cas de la stéréoscopie. On parle alors d'images interpolées stéréoscopiques.

Les procédés d'interpolation d'images se réduisent dans de nombreuses mises en oeuvre pratiques à une simple recopie à partir de l'image précédente (relecture d'une mémoire) ou à une interpolation linéaire.

Des études basées sur l'estimation de mouvement ont été proposés par quelques auteurs (voir les références [1] et [3]). Souvent, le calcul des vecteurs de mouvement est fait sur des blocs de tailles rectangulaires (ou carrées) N x M.

La triangulation des images a surtout été proposée pour améliorer la prédiction d'images dans le cas de schémas inter-images avec estimation-compensation de mouvement (voir les références [4] et [5]).

La notion d'image bidirectionnelle n'est, classiquement, pas utilisée avec une estimation de mouvement basée triangle mais seulement avec une base de blocs.

Dans un procédé classique d'interpolation temporelle, les séquences obtenues par simple recopie de l'image précédente présentent l'inconvénient d'être saccadées. L'utilisation d'une simple interpolation linéaire produit de plus un effet d'ombrage et de flou qui sont très gênants.

Dans des procédés plus élaborés, il est nécessaire d'identifier plusieurs zones, telles que le fond ou les objets en mouvement, ou de calculer des masques de segmentation. Mais les interpolations utilisant des vecteurs mouvements obtenus sur des blocs de taille M x N ne permettent pas de former une image interpolée continue issue d'un champ de vecteur dense.

Les procédés connus qui visent à obtenir des champs de vecteurs plus denses et plus continus nécessitent le calcul des vecteurs vers l'avant (futur de l'image (n-k) vers l'image (n)) et vers l'arrière (passé de l'image (n) vers l'image (n-k)) afin d'identifier des zones d'occlusion (voir la référence [1]). Les procédés existants à ce jour ne permettent pas facilement, et en un seul passage, d'obtenir un champ de vecteurs pour l'image à interpoler qui couvre l'image de façon continue.

Un des problèmes les plus importants à résoudre pour l'interpolation par compensation de mouvement est la détermination d'un vecteur mouvement pour chaque point de l'image à interpoler. Des phénomènes tels que des occlusions, des effets de zooms, des ambiguïtés sur la nature du point (fond ou objet en mouvement) produisent des lacunes dans le plan de l'image interpolée qui doivent être comblées, et des ambiguïtés qui doivent être résolues afin d'éviter les artefacts dans l'image interpolée.

Un document référencé [7] en fin de description décrit un procédé d'interpolation d'images dans lequel on reconstruit tous les éléments d'images à un instant de leur trajectoire en utilisant une maille découpant l'image en blocs ayant la forme de quadrilatères ne se recouvrant pas. Le déplacement des noeuds de cette maille détermine les déformations désirées des blocs d'images. On effectue une estimation des mouvements de ces noeuds. On peut réaliser une cartographie affine en divisant chaque quadrilatère en deux triangles.

Pour résoudre les problèmes existant dans les dispositifs de l'art antérieur, invention a pour objet un procédé permettant de produire des images interpolées en utilisant des champs de vecteurs denses et continus. L'invention a également pour objet de minimiser la quantité d'informations à transmettre.

Exposé de l'invention

L'invention propose un procédé d'interpolation d'images selon la revendication 1.

Avantageusement le nombre de sommets est fixé au début de la séquence ou estimé au cours du traitement de la séquence grâce à une analyse de l'activité dynamique des images, le fait que ce nombre soit variable permettant un contrôle du nombre de vecteurs mouvement servant à représenter le champ de vecteur complet.

Avantageusement l'étape de calcul des sommets (ou noeuds) des triangles est réalisée automatiquement.

L'une des originalités principales du procédé de l'invention réside dans le fait que les sommets sont calculés par le système lui-même, sans transmission d'information supplémentaire.

Avantageusement les sommets sont placés de manière automatique en des points caractéristiques de l'image définis par un gradient spatial important et/ou un gradient temporel important.

Avantageusement la partition de l'image est réalisée grâce à une triangulatin automatique des sommets détectés.

Les gradients spatiaux et temporels peuvent être déterminés à partir des images en mémoire.

La triangulation automatique peut être réalisée de manière univoque dès lors que les images considérées sont identiques.

Avantageusement le mouvement en tout point d'un triangle donné correspond à une transformation affine entièrement définie par le mouvement des trois sommets du triangle.

Le processus d'interpolation, inséré dans un schéma de codage complet peut être suivi d'un codage d'information concernant l'erreur d'interpolation, de manière à améliorer la qualité des images interpolées au décodeur.

Avantageusement le codage de l'erreur d'interpolation est réalisé par un procédé classique de codage.

Avantageusement le procédé de l'invention peut être amélioré par la transmission d'informations supplémentaires afin d'augmenter la qualité de l'interpolation. Dans ce cas, l'invention peut faire partie intégrante d'un système de codage utilisant des modes de prédiction bidirectionnelles.

Dans un mode de réalisation avantageux le procédé de l'invention comprend successivement les étapes suivantes :

- mémorisation des images n et n-p ;
- triangulation complète d'une image de référence permettant de réaliser une triangulation à partir d'un ensemble de points choisis dans l'image d'après certaines caractéristiques prédéterminées ;
- estimation du mouvement et des déformations de ces triangles pour l'image n-k+p avec 0<p<k située entre l'image n et l'image p, permettant d'obtenir des estimations des vecteurs déplacement des sommets entre l'image n-k et l'image n-k+p ;
- calcul des vecteurs pour chaque point des triangles de l'image n-k+p à interpoler;
- calcul des points de l'image n-k+p en fonction de leurs vecteurs estimés.

Avantageusement dans l'étape de triangulation on met en oeuvre un maillage automatique. L'image de référence est l'image n ou l'image n-k. L'image n-k est soumise à un filtrage passe-haut. Les points choisis sont des points de gradient important ou des points de différence temporelle importante.

Avantageusement, dans l'étape de calcul des vecteurs, la valeur des composantes du vecteur déplacement au point considéré est calculée comme suit :

$$u(x,y) = x' - x = (a-1)x + by + e \equiv a_1 + a_2 x + a_3 y$$

$$v(x,y) = y' - y = cx + (d-1)y + f \equiv a_4 + a_5 x + a_6 y$$

Ces six composantes $a_i$ sont calculées en fonction des déplacements aux sommets de l'image n-k+p du triangle englobant le point considéré.

Dans un autre mode de réalisation, le procédé de l'invention peut s'intégrer à un système de codage à réduction de débit ou être rendu plus efficace dans un système de reconstitution en codant l'erreur d'interpolation.

Le procédé de triangulation est alors appliqué sur des points privilégiés dont la détermination est faite de manière univoque dès lors que les images considérées sont identiques.

Ainsi, l'ensemble des cinq étapes précédentes peut être réalisé par le décodeur sans la transmission ou l'utilisation de données supplémentaires pour calculer l'image interpolée prédite.

Un codage classique est alors réalisé sur le signal d'erreur entre l'image vraie et sa prédiction (l'image interpolée). On peut ainsi utiliser une interpolation par triangulation dans un codage quelconque.

Aux cinq étapes précédentes sont donc ajoutés pour toute image (n-k+p) avec 0<p<K :

■ Au codage (ou plus généralement avec tout système de traitement direct) :

- dans une sixième étape, le calcul du signal d'erreur qui est constitué d'une différence (seuillée ou non) entre l'image à transmettre (n-k+p) et l'image interpolée (n-k+p) issue du calcul,
- dans une septième étape le codage par un procédé classique de l'image erreur de prédiction.

■ Au décodage (ou plus généralement avec tout système de traitement inverse) la sixième étape est la même et la septième étape devient :

- l'erreur de prédiction est décodée et ajoutée à l'image erreur de prédiction calculée dans la sixième étape.

L'invention utilisée dans le cadre d'un système de compression permet d'utiliser l'image interpolée comme une prédiction pour laquelle des données complémentaires peuvent être transmises à l'aide d'un procédé classique (par exemple un codage par transformation du signal d'erreur entre l'image vraie et sa prédiction interpolée avec le procédé de l'invention).

Le procédé de l'invention ne nécessite pas de transmettre les points caractéristiques (sommets des triangles et vecteurs) utilisés.

Ce même procédé de l'invention est applicable pour le calcul d'images intermédiaires dans le cas d'images stéréoscopiques.

Le rendu de séquences animées dans lesquelles des images ont été omise est très nettement amélioré. Par exemple, une mise en oeuvre du procédé d'interpolation d'images sur des séquences codées avec H.261 à 10 Hz montre un gain très visible et important en terme de SNR. Le rendu stéréoscopique pour lequel le nombre de vues a été limité est grandement amélioré.

Brève description des dessins

- La figure 1 illustre la représentation d'une image ;
- la figure 2 illustre une interpolation inter-image par compensation de mouvement basée sur une décomposition triangulaire d'une image ;
- la figure 3 illustre le fonctionnement d'un mode de réalisation de l'invention ;
- la figure 4 illustre l'étape de détermination des sommets et de la triangulation ;
- la figure 5 illustre le déplacement des sommets d'un triangle englobant un point considéré ;
- ces figures 6A, 6B et 6C illustrent le calcul des points de l'image en fonction de leurs vecteurs estimés ;
- la figure 7 illustre de manière générale ce mode de réalisation de l'invention.

Exposé détaillé de l'invention

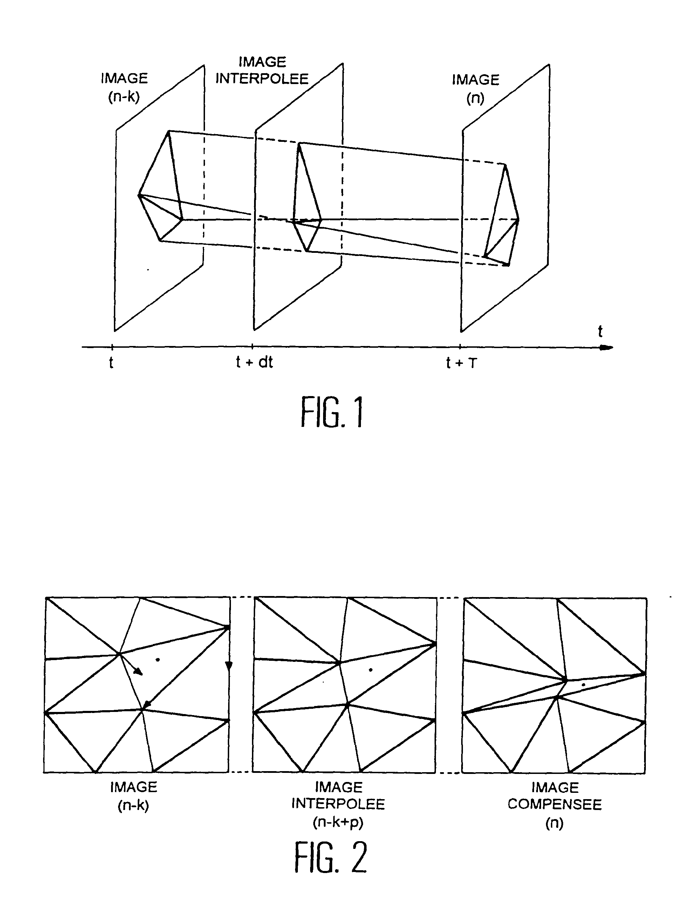

Comme représenté sur la figure 1, une image est représentée par un ensemble de triangles adjacents. Les sites de référence considérés sont les sommets de chaque triangle, de manière à ce que l'image transformée obtenue soit continue.

Les images (n) et (n-k) entre lesquelles les images sont à interpoler sont mémorisées afin que les calculs nécessaires à la mises en oeuvre du procédé puissent être réalisés. Le nombre d'images qui peuvent être interpolées est variable : il dépend de la valeur de k.

Les images (n) et (n-k) peuvent consister en des images d'une même scène à des temps (n) et (n-k) différents (cas d'interpolation temporelle), ou en des images représentant une même scène au même instant sous des angles de vue différente (cas d'interpolation stéréoscopique).

Plusieurs techniques de triangulation sont connues et ont déjà été proposées pour des applications de prédiction dans le codage d'image, mais l'originalité du présent procédé provient du fait que la technique est utilisée pour une interpolation et que la transmission des sommets des triangles peut être omise.

La figure 2 illustre une interpolation inter-image par compensation de mouvement basée sur une décomposition triangulaire d'une image.

## Mode interpolation pure

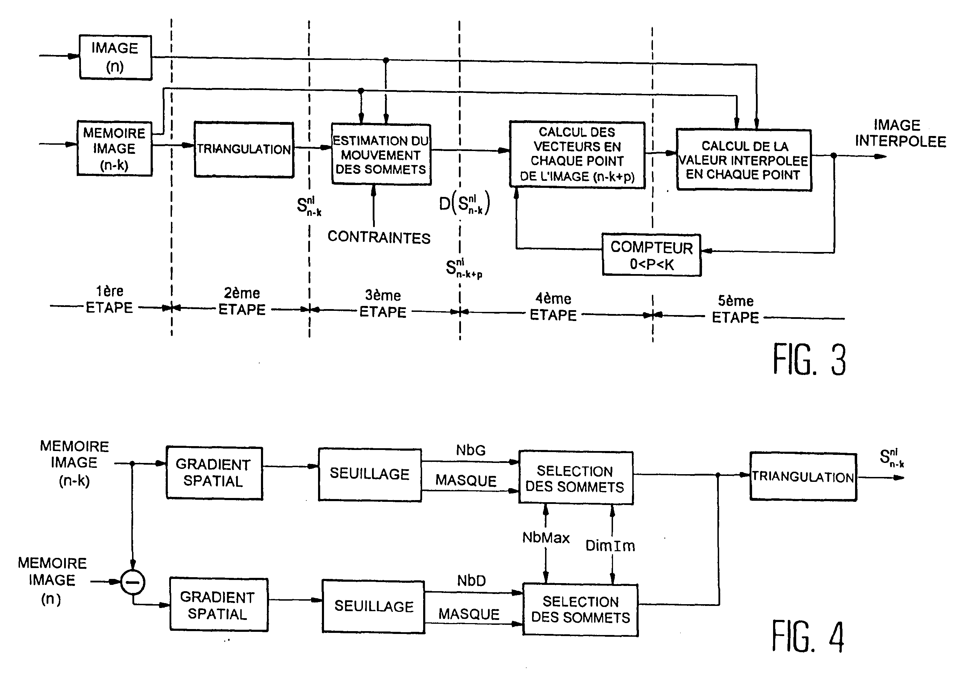

Ce premier mode réalisation de l'invention, représenté sur la figure 3, comprend la succession des étapes suivantes :

Une première étape consiste à mémoriser les images (n) et (n-k). Ces images (n) et (n-k) sont celles qui sont connues par le système de reconstruction. Dans le cas d'un décodeur, il s'agit des images reconstruites à partir des informations transmises par un codeur. Le nombre d'images qu'il est possible d'interpoler correspond à la valeur (k-1).

Une seconde étape consiste en la triangulation complète de l'image de référence, qui dans ce mode peut être l'image (n) ou l'image (n-k) suivant la mise en oeuvre choisie.

Dans cette étape de triangulation un maillage automatique est mis en oeuvre dans le cadre du procédé. Il consiste à réaliser une triangulation à partir d'un ensemble de points choisis dans l'image d'après certaines caractéristiques prédéterminées. En particulier, on peut choisir des points de gradient important, comme des points de différence temporelle importante. Les sommets sont choisis parmi ces points de telle façon qu'ils soient répartis dans toute l'image.

Un exemple de maillage peut être le suivant: l'image (n-k) est soumise à un filtrage passe-haut. L'image de gradient obtenue, qui peut être seuillée, fournit l'ensemble des points parmi lesquels seront choisis les sommets. Cette sélection se fait, par exemple, en définissant un intervalle minimum entre chaque sommet, cet intervalle tenant compte du nombre total de sommets, des dimensions de l'image et du nombre de points de gradient obtenus. Un autre procédé simple de sélection consiste à ne retenir que les NbMax points de gradients les plus grands. Un exemple de masque de gradient utilisé pour le filtrage passe-haut est alors :

$$\begin{pmatrix} 0 & -1 & 0 \\ -1 & 4 & -1 \\ 0 & -1 & 0 \end{pmatrix}$$

Le nombre de sommets NbMax est un paramètre qui peut être variable en fonction de la précision recherchée et de la complexité admise. Les paramètres issus de cette deuxième étape sont les coordonnées des sommets (ou noeuds) $S_{n-k}^{ni}$ des triangles.

Une troisième étape est l'estimation du mouvement et des déformations de ces triangles pour l'image (n-k+p) avec 0<p<k située entre l'image (n) et l'image (n-k). Les images pour l'ensemble des valeurs p comprises entre 1 et (k-1) peuvent être interpolées avec un ordre prédéterminé qui dépend du compteur. Des procédés connus, comme celui décrit dans la référence [4], peuvent être utilisées pour estimer ces vecteurs. Le procédé de l'invention peut être mis en oeuvre en utilisant des informations sur les sommets des triangles et les vecteurs mouvement qui sont issus des paramètres transmis par un système de codage basé triangle du type de celui proposé dans les références [3] et [4]. Les paramètres issus de cette troisième étape sont les estimations des vecteurs déplacement des sommets entre l'image (n-k) et l'image (n-k+p) notés $D\left( S_{(n-k),(n-k+p)}^{ni} \right)$. A partir de ces vecteurs on calcule les coordonnées des sommets déplacés $S_{(n-k+p)}^{ni}$.

La description de la détermination des sommets est illustrée sur la figure 4 sur laquelle on a :

- NbG = nombre de points de gradient ;
- NbD = nombre de points de différence ;
- DimIm = dimensions de l'image ;

- NbMax = nombre de sommets total.

La triangulation peut être celle définie par Delaunay dans la référence [6].

Une quatrième étape consiste à calculer les vecteurs pour chaque point des triangles de l'image (n-k+p) à interpoler, c'est-à-dire à faire une estimation des déformations. L'évolution de chaque triangle est représentée par une transformation affine. Ce type de transformation permet la représentation d'un grand nombre de transformations telles que des rotations, des zooms, des translations. Pour chaque point (x,y) de la région considérée, la position transformée (x', y') correspondante est donnée par la relation suivante :

$$\begin{pmatrix} x' \\ y' \end{pmatrix} = \begin{pmatrix} a & b \\ c & d \end{pmatrix} \begin{pmatrix} x \\ y \end{pmatrix} + \begin{pmatrix} e \\ f \end{pmatrix}$$

où les coefficients a, b, c, d, e, f sont déterminés pour chaque triangle.

la valeur des composantes du vecteur déplacement au point considéré est calculé comme suit:

$$\begin{cases} u(x,y) = x' - x = (a-1)x - by - e \equiv a_1 - a_2 x - a_3 x \\ v(x,y) = y' - y = cx - (d-1)y - f \equiv a_4 - a_5 x - a_6 y \end{cases}$$

ou encore, sous forme matricielle :

$$\begin{bmatrix} u \\ v \end{bmatrix} = \begin{bmatrix} 1 & x & y & 0 & 0 & 0 \\ 0 & 0 & 0 & 1 & x & y \end{bmatrix} \begin{bmatrix} a_1 \\ \vdots \\ a_6 \end{bmatrix}$$

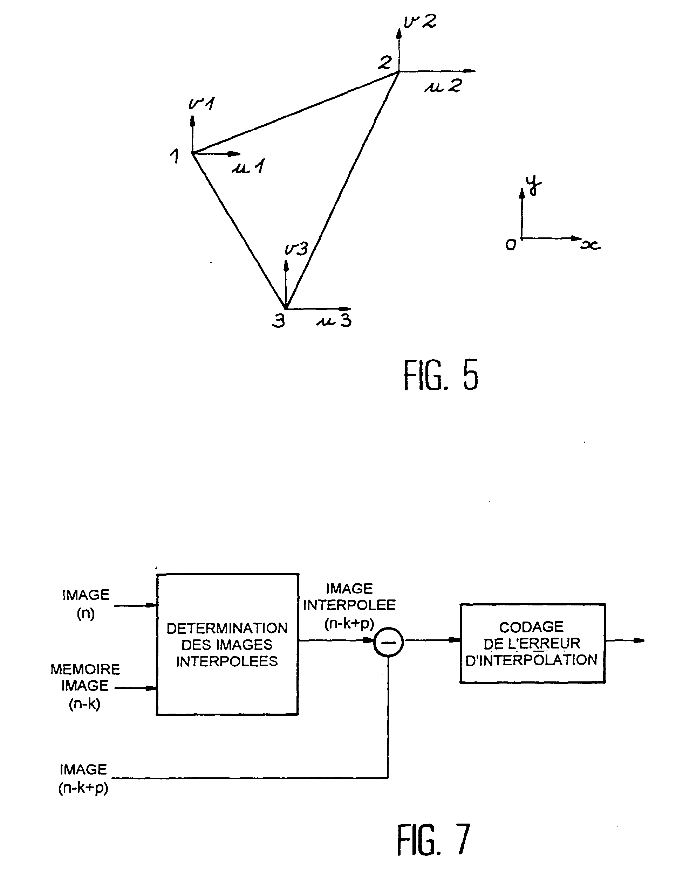

Comme représenté sur la figure 5 les six composantes $a_i$ sont calculées en fonction des déplacements aux sommets (ou noeuds) $S_{n-k+p}^{ni}$ du triangle englobant le point considéré :

$$\begin{bmatrix} u_1 \\ u_2 \\ u_3 \\ v_1 \\ v_2 \\ v_3 \end{bmatrix} = \begin{bmatrix} 1 & x_1 & y_1 & 0 & 0 & 0 \\ 1 & x_2 & y_2 & 0 & 0 & 0 \\ 1 & x_3 & y_3 & 0 & 0 & 0 \\ 0 & 0 & 0 & 1 & x_1 & y_1 \\ 0 & 0 & 0 & 1 & x_2 & y_2 \\ 0 & 0 & 0 & 1 & x_3 & y_3 \end{bmatrix} \begin{bmatrix} a_1 \\ a_2 \\ a_3 \\ a_4 \\ a_5 \\ a_6 \end{bmatrix} = \begin{bmatrix} [\Phi] & 0 \\ 0 & [\Phi] \end{bmatrix} [a]$$

Pour déterminer les coefficients $a_i$ en fonction des déplacements nodaux, l'inverse de la matrice $\Phi$ est calculé :

$$[\Phi]^{-1} = \frac{1}{\det(\Phi)} \begin{bmatrix} x_2 y_3 - x_3 y_2 & x_3 y_1 - x_1 y_3 & x_1 y_2 - x_2 y_1 \\ y_2 - y_3 & y_3 - y_1 & y_1 - y_2 \\ x_3 - x_2 & x_1 - x_3 & x_2 - x_1 \end{bmatrix} \equiv \frac{1}{\det \Phi} \begin{bmatrix} \alpha_1 & \alpha_2 & \alpha_3 \\ \beta_1 & \beta_2 & \beta_3 \\ \gamma_1 & \gamma_2 & \gamma_3 \end{bmatrix}$$

avec:

$$\det(\Phi) = x_2 y_3 - x_3 y_2 - x_3 y_1 - x_1 y_3 - x_1 y_2 - x_2 y_1$$

La matrice est inversible si le déterminant est différent de zéro, c'est-à-dire si l'aire du triangle est non nulle, et donc si le triangle n'est pas dégénéré. Le vecteur déplacement en tout point $p = (x, y)^T$ s'obtient avec le calcul suivant :

$$D(p) = D(x,y) = \begin{bmatrix} u(x,y) \\ v(x,y) \end{bmatrix} = \begin{bmatrix} 1 & x & y & 0 & 0 & 0 \\ 0 & 0 & 0 & 1 & x & y \end{bmatrix} \begin{bmatrix} a_1 \\ \vdots \\ a_6 \end{bmatrix}$$

avec :

$$\begin{bmatrix} a_1 \\ \vdots \\ a_6 \end{bmatrix} = \begin{bmatrix} [\Phi]^{-1} & 0 \\ 0 & [\Phi]^{-1} \end{bmatrix} \begin{bmatrix} u_1 \\ \vdots \\ v_3 \end{bmatrix}$$

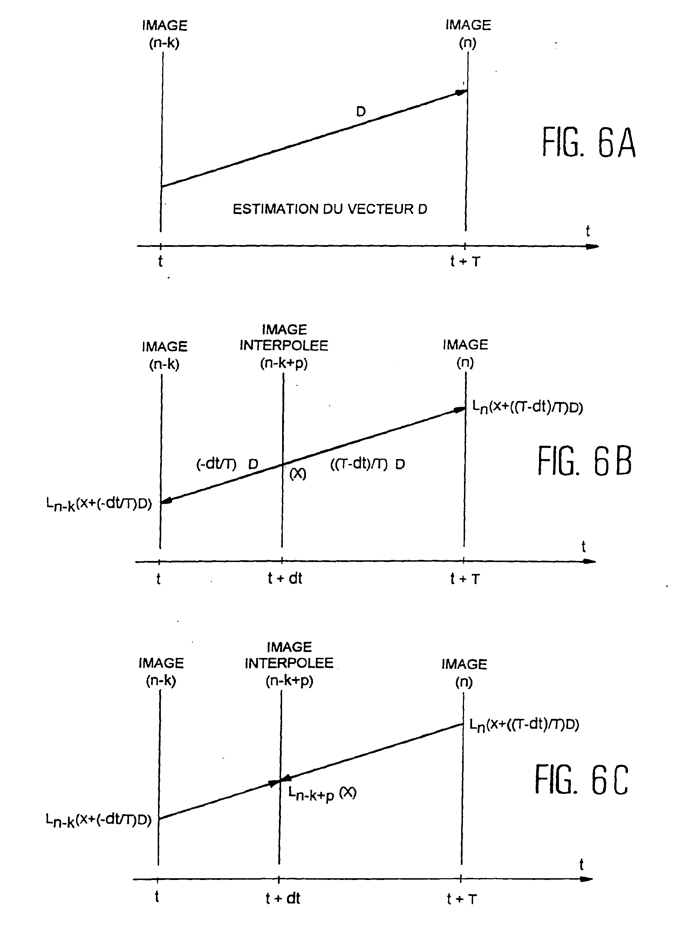

Une cinquième étape consiste à calculer les points de l'image (n-k+p) en fonction de leurs vecteurs estimés. Dans le procédé de l'invention l'image est représentée par un ensemble de triangles adjacents, comme illustré sur les figures 6A, 6B et 6C.

$L_m(k)$ correspond à la valeur de l'image m au point k. Cette valeur L peut être en particulier la luminance ou toute autre caractéristique recherchée de l'image.

L'algorithme proposé utilise un champ de vecteurs continu du fait du modèle considéré. Si l'on considère les informations de structure et de mouvement, la valeur $L_{n-k+p}$, par exemple la luminance, de l'image à interpoler est calculée pour chaque triangle de la manière suivante :

$$L_{n-k+p}(x) = \left( \frac{T - dt}{T} \right) L_{n-k}\left( x - \frac{dt}{T} D \right) + \frac{dt}{T} L_n\left( x - \left( \frac{T - dt}{T} \right) D \right)$$

$$D(p) = D(x,y) = \begin{bmatrix} u(x,y) \\ v(x,y) \end{bmatrix} = \begin{bmatrix} 1 & x & y & 0 & 0 & 0 \\ 0 & 0 & 0 & 1 & x & y \end{bmatrix} \begin{bmatrix} a_1 \\ \vdots \\ a_6 \end{bmatrix}$$

avec :

$$\begin{bmatrix} a_1 \\ \vdots \\ a_6 \end{bmatrix} = \begin{bmatrix} [\Phi]^{-1} & 0 \\ 0 & [\Phi]^{-1} \end{bmatrix} \begin{bmatrix} u_1 \\ \vdots \\ v_3 \end{bmatrix}$$

Le changement de la valeur de (p) permet de calculer une nouvelle image interpolée en reprenant les calculs à partir de la quatrième étape.

Le mode de l'invention ainsi défini est représenté, de manière générale, sur la figure 7.

**Mode interpolation augmentée et intégrée de type "images bidirectionnelles"**

Dans un second mode de réalisation, le procédé de l'invention peut aussi s'intégrer à un système de codage à réduction de débit ou être rendu plus efficace dans un système de reconstitution en codant l'erreur d'interpolation.

Le procédé de triangulation est appliqué sur des points privilégiés dont la détermination est faite de manière univoque dès lors que les images considérées sont identiques : il s'agit par exemple du choix des NbMax points de gradient les plus grands avec un masque de calcul prédéfini.

Ainsi, l'ensemble des cinq étapes décrites précédemment peut être réalisé par le décodeur sans la transmission ou l'utilisation de données supplémentaires pour calculer l'image interpolée prédite.

Un codage classique est alors réalisé sur le signal d'erreur entre l'image vraie et sa prédiction (l'image interpolée). Ce procédé permet d'utiliser une interpolation par triangulation dans un codage quelconque.

Aux étapes du paragraphe précédent sont donc ajoutées pour toute image (n-k+p) avec 0<p<k :

■ Au codage (ou plus généralement avec tout système de traitement direct) :

- dans une sixième étape, on réalise le calcul du signal d'erreur qui est constitué d'une différence (seuillée ou non) entre l'image à transmettre (n-k+p) et l'image interpolée (n-k+p) issue du calcul de la cinquième étape,
- dans une septième étape, on réalise le codage par un procédé classique de l'image erreur de prédiction.

■ Au décodage (ou plus généralement avec tout système de traitement inverse), la sixième étape reste la même et la septième étape devient :

- l'erreur de prédiction est décodée et ajoutée à l'image erreur de prédiction calculée dans la sixième étape.

<u>REFERENCES</u>

[1] J. Ribas-Corbera, J. Sklanski, "Interframe interpolation of cinematic sequences", JVCIR, Vol. 4, No. 4, décembre 1993, page 392

[2] C. Cafforio, F. Rocca, S. Tubaro, "Motion compensation image interpolation", IEEE Transaction on Communications, Vol. 38, No. 2, Février 1990

[3] R. Thoma, M. Bierling, "Motion compensating interpolation considering covered and uncovered background", Signal Processing: Image comm., Vol. 1, No. 2, octobre 1989

[4] J.J. Jacq., C. Roux, "Recalage monomodalité automatique en imagerie médicale 2D et 3D à l'aide d'un algorithme génétique traditionnel", 9ème congrès de reconnaissance des formes et intelligence artificielle, AFCET/AFIA, Paris, janvier 1994

[3] H. Brusewitz, "Motion estimation with triangles", Proc 3rd Int. Conference on 64kbps coding of moving video, free session, Rotterdam, Pays-Bas, septembre 1990

[4] H. Brusewitz, "Method of motion compensation and elastic deformation in picture sequences", demande de brevet PCT numéro WO 92/03799 déposée le 12 août 1991

[5] Y. Nakaya, HK. Harashima, "An iterative motion estimation method using triangular patches for motion estimation", SPIE Symp. on Visual Comm. and Image Proc., 1991

[6] Y. Correc, E. Chapuis, "Fast computation of Delaunay triangulations", Adv. Eng. Software, 1987

[7] J. Nieweglowski et Al., "Motion Compensated Video Sequence Interpolation Using Digital Image Warping", ICASSP'94, IEEE International Conference On Acoustics, Speech and Signal Processing, vol. 5, 19-22 avril 1994, pages 205-208.

## Revendications

1. Procédé d'interpolation d'images qui utilise une triangulation des images selon laquelle une image est représentée par un ensemble de triangles adjacents et une estimation du mouvement des sommets de ces triangles, pour réaliser une interpolation d'images sous-échantillonnées temporellement ou stéréoscopiquement, **caractérisé en ce qu'**il comporte des étapes de :

   - mémorisation des images (n) et (n-k) ;
   - détection automatique des sommets de la triangulation en fonction du contenu de l'image (n-k) en mémoire par application d'un filtre passe-haut sur l'image (n-k), pour déterminer des points de gradient, et d'une sélection d'un nombre de points et de leur position parmi ces points de gradient, comme sommets de la triangulation, les paramètres issus de cette détection des sommets étant les coordonnées des sommet des triangles ;
   - estimation du mouvement de ces triangles pour l'image (n-k+p) avec 0<p<k située entre l'image (n) et l'image (n-k), les paramètres issus de cette étape d'estimation étant les estimations des vecteurs déplacement des sommets entre l'image (n-k) et l'image (n-k+p), et estimation des déformations de ces triangles pour l'image (n-k+p), par calcul des coordonnées des sommets pour l'image (n-k+p) ;
   - calcul des vecteurs pour chaque point des triangles de l'image (n-k+p) à interpoler, par une transformation affine en fonction des vecteurs déplacements des sommets pour l'image (n-k+p) du triangle englobant chaque point considéré, un champ continu des vecteurs déplacement étant généré pour l'image (n-k+p) ;
   - calcul par pondération des valeurs de l'image (n-k+p) à interpoler en fonction de ce champ continu des vecteurs déplacement pour l'image (n-k+p), et des images (n) et (n-k), le résultat de ce calcul étant l'image interpolée (n-k+p).

2. Procédé selon la revendication 1, **caractérisé en ce que** le nombre de sommets de la triangulation est prédéterminé.

3. Procédé selon la revendication 1, **caractérisé en ce que** le nombre de sommets de la triangulation dépend d'un intervalle minimum entre les sommets, cet intervalle tenant compte du nombre total de sommets, des dimensions de l'image et du nombre de points de gradient obtenus.

4. Procédé selon l'une quelconque l'une quelconque des revendications 1 à 3, **caractérisé en ce que** le calcul de la position des sommets se fait sans transmission d'informations supplémentaire.

5. Procédé selon l'une quelconque des revendications 1 à 4, **caractérisé en ce que** les sommets sont placés de manière automatique en des points caractéristiques de l'image définis par un gradient spatial important et/ou un gradient temporel important.

6. Procédé selon l'une quelconque des revendications 1 à 5, **caractérisé en ce qu'**il est intégré dans un schéma de codage, et **en ce qu'**il est suivi d'un codage de l'erreur d'interpolation.

## Claims

1. Method of interpolating images which uses a triangulation of the images according to which an image is represented by a set of adjacent triangles and an estimation of the motion of the vertices of these triangles, so as to carry out an interpolation of temporally or stereoscopically sub-sampled images, **characterized in that** it comprises steps of:

   - storing images (n) and (n-k);
   - automatically detecting the vertices of the triangulation as a function of the content of image (n-k) in memory by applying a high-pass filter to image (n-k), so as to determine gradient points, and selecting a number of points and their position from among these gradient points, as vertices of the triangulation, the parameters arising from this detecting of the vertices being the coordinates of the vertices of the triangles;

- estimating the motion of these triangles for image (n-k+p) with 0 < p < k situated between image (n) and image (n-k), the parameters arising from this estimating step being the estimates of the displacement vectors of the vertices between image (n-k) and image (n-k+p), and estimating the deformations of these triangles for image (n-k+p), by calculating the coordinates of the vertices for image (n-k+p);

- calculating vectors for each point of the triangles of image (n-k+p) to be interpolated, by an affine transformation as a function of the displacement vectors of the vertices for image (n-k+p) of the triangle encompassing each point considered, a continuous field of the displacement vectors being generated for image (n-k+p);

- calculating by weighting the values of image (n-k+p) to be interpolated as a function of this continuous field of the displacement vectors for image (n-k+p), and images (n) and (n-k), the result of this calculation being the interpolated image (n-k+p).

2. Method according to Claim 1, **characterized in that** the number of vertices of the triangulation is predetermined.

3. Method according to Claim 1, **characterized in that** the number of vertices of the triangulation depends on a minimum interval between the vertices, this interval taking account of the total number of vertices, of the dimensions of the image and of the number of gradient points obtained.

4. Method according to any one of Claims 1 to 3, **characterized in that** the calculation of the position of the vertices is done without additional transmission of information.

5. Method according to any one of Claims 1 to 4, **characterized in that** the vertices are placed automatically at characteristic points of the image that are defined by a large spatial gradient and/or a large temporal gradient.

6. Method according to any one of Claims 1 to 5, **characterized in that** it is integrated into a coding scheme, and **in that** it is followed by a coding of the interpolation error.

**Patentansprüche**

1. Verfahren zur Bildinterpolation, das eine Triangulation der Bilder, gemäß der ein Bild durch eine Gruppe von benachbarten Dreiecken dargestellt wird, und eine Schätzung der Bewegung der Spitzen dieser Dreiecke verwendet, um eine Interpolation von zeitlich oder stereoskopisch unterabgetasteten Bildern durchzuführen, **dadurch gekennzeichnet, dass** es Schritte aufweist, die bestehen aus:

- der Speicherung der Bilder (n) und (n-k);

- der automatischen Erfassung der Spitzen der Triangulation in Abhängigkeit vom Inhalt des gespeicherten Bilds (n-k) durch Anwenden eines Hochpassfilters an das Bild (n-k), um Gradientenpunkte zu bestimmen, und von einer Auswahl einer Anzahl von Punkten und ihrer Position aus diesen Gradientenpunkten als Spitzen der Triangulation, wobei die von dieser Erfassung der Spitzen stammenden Parameter die Koordinaten der Spitzen der Dreiecke sind;

- der Schätzung der Bewegung dieser Dreiecke für das Bild (n-k+p) mit 0<p<k zwischen dem Bild (n) und dem Bild (n-k) angeordnet, wobei die aus diesem Schätzungsschritt stammenden Parameter die Schätzungen der Verschiebungsvektoren der Spitzen zwischen dem Bild (n-k) und dem Bild (n-k+p) sind, und der Schätzung der Verformungen dieser Dreiecke für das Bild (n-k+p) durch Berechnung der Koordinaten der Spitzen für das Bild (n-k+p);

- der Berechnung der Vektoren für jeden Punkt der Dreiecke des zu interpolierenden Bilds (n-k+p) durch eine affine Umformung in Abhängigkeit von den Verschiebungsvektoren der Spitzen für das Bild (n-k+p) des Dreiecks, das jeden betrachteten Punkt umfasst, wobei ein kontinuierliches Feld der Verschiebungsvektoren für das Bild (n-k+p) erzeugt wird;

- der Berechnung durch Gewichtung der Werte des zu interpolierenden Bilds (n-k+p) in Abhängigkeit von diesem kontinuierlichen Feld der Verschiebungsvektoren für das Bild (n-k+p), und der Bilder (n) und (n-k), wobei das Ergebnis dieser Berechnung das interpolierte Bild (n-k+p) ist.

2. Verfahren nach Anspruch 1, **dadurch gekennzeichnet, dass** die Anzahl von Spitzen der Triangulation vorbestimmt ist.

3.   Verfahren nach Anspruch 1, **dadurch gekennzeichnet, dass** die Anzahl von Spitzen der Triangulation von einem Mindestzwischenraum zwischen den Spitzen abhängt, wobei dieser Zwischenraum die Gesamtanzahl der Spitzen, die Abmessungen des Bilds und die Anzahl von erhaltenen Gradientenpunkten berücksichtigt.

4.   Verfahren nach einem der Ansprüche 1 bis 3, **dadurch gekennzeichnet, dass** die Berechnung der Position der Spitzen ohne zusätzliche Informationsübertragung erfolgt.

5.   Verfahren nach einem der Ansprüche 1 bis 4, **dadurch gekennzeichnet, dass** die Spitzen automatisch an kennzeichnenden Punkten des Bilds angeordnet werden, die durch einen großen räumlichen Gradienten und/oder einen großen zeitlichen Gradienten definiert sind.

6.   Verfahren nach einem der Ansprüche 1 bis 5, **dadurch gekennzeichnet, dass** es in ein Codierschema integriert ist und dass es von einer Codierung des Interpolationsfehlers gefolgt wird.

IMAGE
(n-k)

IMAGE
INTERPOLEE

IMAGE
(n)

t

t          t + dt          t + T

FIG. 1

IMAGE
(n-k)

IMAGE
INTERPOLEE
(n-k+p)

IMAGE
COMPENSEE
(n)

FIG. 2

FIG. 3

FIG. 4

EP 0 722 251 B1

FIG. 5

FIG. 7

FIG. 6A

ESTIMATION DU VECTEUR D

FIG. 6B

FIG. 6C

## RÉFÉRENCES CITÉES DANS LA DESCRIPTION

**Documents brevets cités dans la description**

*   WO 9203799 A

**Littérature non-brevet citée dans la description**

*   **J. RIBAS-CORBERA ; J. SKLANSKI.** Interframe interpolation of cinematic sequences. *JVCIR,* Décembre 1993, vol. 4 (4), 392
*   **C. CAFFORIO ; F. ROCCA ; S. TUBARO.** Motion compensation image interpolation. *IEEE Transaction on Communications,* Février 1990, vol. 38 (2
*   **R. THOMA ; M. BIERLING.** Motion compensating interpolation considering covered and uncovered background. *Signal Processing: Image comm.,* Octobre 1989, vol. 1 (2
*   **J.J. JACQ. ; C. ROUX.** Recalage monomodalité automatique en imagerie médicale 2D et 3D à l'aide d'un algorithme génétique traditionnel. *9ème congrès de reconnaissance des formes et intelligence artificielle, AFCET/AFIA,* Janvier 1994
*   **H. BRUSEWITZ.** Motion estimation with triangles. *Proc 3rd Int. Conference on 64kbps coding of moving video, free session,* Septembre 1990
*   **Y. NAKAYA ; HK. HARASHIMA.** An iterative motion estimation method using triangular patches for motion estimation. *SPIE Symp. on Visual Comm. and Image Proc.,* 1991
*   **Y. CORREC ; E. CHAPUIS.** Fast computation of Delaunay triangulations. *Adv. Eng. Software,* 1987
*   **J. NIEWEGLOWSKI et al.** Motion Compensated Video Sequence Interpolation Using Digital Image Warping. *ICASSP'94, IEEE International Conference On Acoustics, Speech and Signal Processing,* 19 Avril 1994, vol. 5, 205-208